# EUROPÄISCHE PATENTSCHRIFT

(11) **EP 3 914 819 B1**
(45) Veröffentlichungstag und Bekanntmachung des Hinweises auf die Patenterteilung: **27.11.2024**
(21) Anmeldenummer: 20701721.1
(22) Anmeldetag: 21.01.2020
(51) Int. Cl.: B01F 25/10, B01F 25/431, F04D 29/42

(54) **BAUGRUPPE FÜR EINE LUFTVERSORGUNG EINES VERBRENNUNGSMOTORS UND LUFTVERSORGUNGSTRAKT FÜR EINEN VERBRENNUNGSMOTOR MIT EINER SOLCHEN**
ASSEMBLY FOR AN AIR SUPPLY OF AN INTERNAL COMBUSTION ENGINE AND AIR SUPPLY DUCT FOR AN INTERNAL COMBUSTION ENGINE WITH SUCH AN ASSEMBLY
ENSEMBLE POUR UNE ALIMENTATION EN AIR D'UN MOTEUR À COMBUSTION INTERNE ET CONDUIT D'ALIMENTATION EN AIR POUR UN MOTEUR À COMBUSTION INTERNE AVEC UN TEL ENSEMBLE

(30) Priorität: 21.01.2019 DE 102019101396
(43) Veröffentlichungstag der Anmeldung: 01.12.2021
(73) Patentinhaber: VOLKSWAGEN AG, 38440 Wolfsburg (DE)
(72) Erfinder: BRANDES-GROTE, Kerstin, 38176 Wendeburg (DE); BLOCK, Gerald, 38165 Lehre (DE); MAAS, Christian, 38179 Schwülper (DE); GROTE, Andreas, 38176 Wendeburg (DE)
(74) Vertreter: Gulde & Partner
(86) Internationale Anmeldenummer: PCT/EP2020/051374
(87) Internationale Veröffentlichungsnummer: WO 2020/152143

(56) Entgegenhaltungen:
- EP-A1- 1 245 789
- EP-A2- 2 299 121
- WO-A1-2016/096813
- DE-A1- 102011 117 360
- DE-C1- 4 201 677

## Beschreibung

Die Erfindung betrifft eine Baugruppe für eine Luftversorgung eines Verbrennungsmotors eines Kraftfahrzeugs, welche ausgebildet ist, wenigstens zwei unterschiedliche Gasströme, insbesondere Frischluft und rückgeführtes Abgas, miteinander zu vermischen.

Abgasrückführungen sind insbesondere bei Kraftfahrzeugen mit Verbrennungsmotoren hinlänglich bekannt. Sie dienen einerseits zur Entdrosselung des Motors in bestimmten Betriebspunkten sowie andererseits zur Herbeiführung einer auf den jeweiligen Betriebspunkt optimal abgestimmten Zusammensetzung der Zylinderladung. Zudem erlaubt die Abgasrückführung die Verringerung der Verbrennungstemperatur und damit der Stickoxidemissionen. Es resultieren eine Verringerung von Schadstoffemissionen sowie eine Senkung der Klopfneigung des Motors.

Bei der Abgasrückführung wird üblicherweise ein Teil des Abgasstroms der dem Verbrennungsaggregat zuzuführenden Frischluft zugeführt. Hierzu zweigt eine Abgasrückführungsleitung von dem Abgaskanal ab und mündet in die Luftleitung des Verbrennungsmotors. Problematisch bei dieser Zuführung und der herzustellenden Mischung aus Abgas und Frischluft ist, dass sich aufgrund von Turbulenzen üblicherweise Druckverluste im Bereich der Einleitstelle ergeben, sowie die Mischung aus Abgas und Frischluft inhomogen verteilt ist. Des Weiteren besteht bei vorhandenen Turbulenzen und Totwassergebieten die Gefahr, dass sich Ablagerungen in den Leitungen bilden, die eine optimale Durchströmung verhindern können. Diese Problematik verschärft sich im Besonderen, wenn sehr hohe Anteile an Abgas beigemischt werden. Zudem können sich Störeinflüsse auf den Frischluftstrom ergeben, wenn kein Abgas zurückgeführt wird.

Ansätze zur Lösung der genannten Problematik bestehen insbesondere darin, die Zusammenführung der beiden Massenströme über relativ lange Mischwege zu erzeugen. Derartige Ausführungsformen weisen jedoch den Nachteil eines relativ großen Bauraumbedarfs sowie eines negativen Einflusses auf die dynamische Regelbarkeit des Verbrennungsaggregats auf. Aufgrund der auftretenden Druckverluste in den Zuführungsleitungen sind unter Umständen weitere Maßnahmen zur Förderung des Abgases zur Frischluft sowie der Zuführung zu einem gegebenenfalls vorhandenen Verdichter zu treffen, wie zum Beispiel Druckerhöhung in der Abgaszuleitung und/oder Druckminderung in der Frischluftleitung.

Aus der DE 39 31 811 C1 ist ein zylindrischer Rohrleitungsabschnitt in einer Luftansaugleitung einer Brennkraftmaschine bekannt, welcher einen Mischraum aufweist, in den die Abgasrückführungsleitung mit einer tangential gerichteten Öffnung einmündet. Dabei kann jedoch die Ausbildung von Turbulenzen nicht ausgeschlossen werden.

Die DE 31 06 588 A1 offenbart einen Anschluss einer Abgasrückführungsleitung, bei der der Abgas-Massenstrom durch eine Vielzahl von Überströmöffnungen in die Frischluftleitung gelangen kann. Dabei sind die Überströmöffnungen derart angeordnet, dass eine dadurch erzeugte Rotationsbewegung der einzelnen Teil-Abgasmassenströme der Drehbewegung der anströmenden Frischluft entspricht, um Turbulenzen zu vermeiden. Dabei kann jedoch nicht ausgeschlossen werden, dass sich Totwassergebiete ausbilden, welche zu einer Versottung führen können.

Die KR 2013 0060422 A offenbart eine Abgasrückführung und einen Verdichter eines Abgasturboladers, sowie eine Vermischung von Abgas und Luft. Hierbei wird der Abgasstrom in einer ersten Leitung geführt und über mehrere Öffnungen der Leitung für den Luftstrom zugeführt. Der Massenstrom der beiden Gase wird schließlich in dieser Leitung vermischt. Die Vermischung ist so ausgebildet, dass die beiden Gase anschließend mit relativ geringen Verlusten verdichtet werden können. Jedoch läuft die Vermischung der beiden Gase in diesem System wiederum nicht optimal ab und es treten die bereits zuvor genannten ungewollten Phänomene auf.

WO 2016/096 813 A1 offenbart einen Ansaugtrakt eines Verbrennungsmotors, umfassend einen Verdichter eines Abgasturboladers, eine Gaszuführungseinheit, die stromauf des Verdichters angeordnet ist und ausgebildet ist, Frischluft und einen zweiten Gasstrom miteinander zu vermischen, und eine Luftleiteinrichtung, welche ausgebildet ist, eine Strömung des vermischten Gasstroms stromauf des Verdichters zu parallelisieren.

Ein Gaszuführungssystem, das rückgeführtes Abgas dem Verbrennungsmotor druckverlustarm und ohne störende Einflüsse auf die Luftströmung zuführen kann, beschreibt DE 10 2011 117 360 A1. Im Fall von Niederdruck-Abgasrückführung liegt das Bauteil allerdings vor dem Verdichter. Nachteilig ist dann, dass das Abgas hinter der Einleitstelle in die Luftleitung drallbehaftet ist und die drallbehaftete Strömung negative Auswirkungen auf das Verdichterverhalten haben kann. Zudem legt sich das Abgas nach seiner Zuleitung wie ein Schlauch um die innen geführte Luft. Das Abgas ist allerdings generell heißer als die Luft. Damit können insbesondere die Spitzen der Verdichterschaufeln, wo ohnehin die höchste mechanische Belastung vorliegt, durch die heißeren Temperaturen noch stärker mechanischen Beanspruchungen unterlegen sein.

Die Aufgabe der Erfindung besteht darin, ein Bauteil für die Luftversorgung eines Verbrennungsmotors bereitzustellen, das die vorgenannten Nachteile zumindest teilweise überwindet. Insbesondere soll eine möglichst effiziente und geräuscharme Vermischung und Verdichtung von Frischluft und Abgas, eine kompakte Bauweise, sowie eine hohe Lebensdauer der beteiligten Bauteile ermöglicht werden.

Diese Aufgaben werden zumindest teilweise durch eine Baugruppe, einen Luftversorgungstrakt für einen Verbrennungsmotor sowie ein entsprechendes Fahrzeug mit den Merkmalen des unabhängigen Anspruchs gelöst. Vorteilhafte Ausgestaltungen der Erfindung ergeben sich aus den abhängigen Ansprüchen.

Die erfindungsgemäße Baugruppe für eine Luftversorgung eines Verbrennungsmotors umfasst einen Verdichter eines Abgasturboladers; eine Gaszuführungseinheit, die (in Bezug auf eine Strömungsrichtung der Gasströme) stromauf des Verdichters angeordnet ist und die ausgebildet ist, einen ersten Gasstrom und einen zweiten Gasstrom miteinander zu vermischen; und einen Strömungsgleichrichter, welcher ausgebildet ist, eine Strömung des vermischten Gasstroms stromauf des Verdichters im Wesentlichen zu parallelisieren.

Dabei handelt es sich bei dem ersten Gasstrom vorzugsweise um einen Frischluftstrom zur Luftversorgung eines Verbrennungsmotors und bei dem zweiten Gasstrom um einen im Wege einer Abgasrückführung rückgeführten Abgasstrom. Somit stellt das Mischgas aus Frischluft und Abgas die dem Verbrennungsmotor zuzuführende Versorgungsluft zur Darstellung der Zylinderfüllung dar.

Durch die Anordnung des Strömungsgleichrichters stromauf des Verdichters wird die Drallbildung des zugeleiteten Abgases und des Mischgases direkt am Strömungsgleichrichter neutralisiert. Somit wird das Verdichterverhalten nicht durch die drallbehaftete Strömung beeinträchtigt. Zudem sorgt der Gleichrichter für eine bessere Durchmischung der Gasströme und damit eine homogene Temperaturverteilung im Mischgas. Hierdurch wird die thermische Belastung der Spitzen der Verdichterschaufeln gesenkt und die Lebensdauer des Verdichters verlängert.

Die "im Wesentlichen parallelisierte Strömung" bezieht sich hierbei insbesondere auf eine im Wesentlichen turbulente Strömung, bei der die Strömungsrichtung über den gesamten Strömungsquerschnitt bei einer makroskopischeren Betrachtungsweise im Wesentlichen parallel zum Strömungskanal ausgerichtet ist, das heißt im Wesentlichen drallfrei ausgebildet ist. Dabei ist der Grad der Parallelisierung zumindest größer als in einer entsprechenden Baugruppe ohne den erfindungsgemäßen Strömungsgleichrichter. Idealerweise wird, soweit physikalisch möglich, sogar eine vollständig parallelisierte Strömung erzielt. Vorzugsweise weist die im Wesentlichen parallelisierte Strömung auch reduzierte Geschwindigkeitsschwankungen gegenüber einer Baugruppe gemäß Stand der Technik auf.

Die Baugruppe ermöglicht somit eine drallfreie oder -arme, druckverlustarme und/oder störungsfreie Mischung und Verdichtung der unterschiedlichen Gasströme. Weiterhin wird der Geräuschpegel reduziert.

Aufgrund der Anordnung der Gaszuführungseinheit stromauf des Verdichters bezieht sich die Baugruppe insbesondere auf eine Niederdruck-Abgasrückführung, bei der die Einleitung des rückgeführten Abgases in den Frischluftstrom auf der Niederdruckseite des Verdichters erfolgt.

In bevorzugter Ausgestaltung umfasst der Strömungsgleichrichter eine Mehrzahl radialer Strömungselemente. Dabei wird unter einem "radialen Strömungselement" ein Gebilde verstanden, das im Wesentlichen flächig ausgebildet ist, beispielsweise blatt- oder flügelförmig, und sich in seiner Längserstreckung im Wesentlichen radial (bezogen auf die Strömungsrichtung der Gasströme) erstreckt. Die radialen Strömungselemente sind so angeordnet, dass ihre Hauptfläche im Wesentlichen parallel zur Strömungsrichtung verläuft und die Gasströmung somit lediglich die vergleichsweise kleinflächigen Anströmflächen (Strömungsquerschnitt) "sieht". Die radialen Strömungselemente bewirken eine Verminderung des Dralls der Gasströme oder sogar eine weitestgehend vollständige Parallelisierung. Anzahl, konkrete geometrische Ausgestaltung und Abmessungen der radialen Strömungselemente können variieren und sind vorzugsweise an die Geometrie der Baugruppe derart angepasst, dass die Parallelisierung des Gasstroms möglichst groß wird bei möglichst geringen Druckverlusten und geringem Bauraumbedarf. Geeignete radiale Strömungselemente sind beispielsweise in Bezug auf einen Strömungsquerschnitt trapezförmig ausgebildet.

Gemäß einer Ausführung der Erfindung umfasst der Strömungsgleichrichter einen hohlzylinderförmigen Leitungsabschnitt, an dessen innerem Umfang die radialen Strömungselemente angeordnet sind. Dabei kann ein solcher Gleichrichter innerhalb einer strömungsführenden Leitung der Gaszuführungseinheit angeordnet sein oder fluchtend an diese anschließen. Vorzugsweise sind der hohlzylinderförmige Leitungsabschnitt und die radialen Strömungselemente insbesondere einstückig ausgebildet.

In einer vorteilhaften alternativen Ausgestaltung umfasst der Strömungsgleichrichter ein axiales Strömungselement, an dessen äußeren Umfang die radialen Strömungselemente angeordnet sind. Auch hier können das axiale Strömungselement und die radialen Strömungselemente einstückig ausgebildet sein. Durch das axiale Strömungselement wird eine bessere Anströmung der radialen Strömungselemente und damit eine verbesserte Durchmischung der beiden Gasströme bewirkt. Insbesondere bei einem direkten Anschluss des Strömungsgleichrichters an den Verdichter verbessert das axiale Strömungselement auch die Anströmung der Verdichterschaufeln.

Die Elemente des Strömungsgleichrichters (radiale Strömungselemente, axiales Strömungselement, hohlzylinderförmiger Leitungsabschnitt) sind vorzugsweise aus einem metallischen Material hergestellt. Insbesondere wird eines oder mehrere der folgenden Materialien verwendet: Titan, Titanlegierung, Aluminium, Stahl, Gusseisen. Insbesondere sind die Elemente des Strömungsgleichrichters aus dem gleichen Material gefertigt.

Bevorzugt ist der Strömungsgleichrichter innerhalb der Gaszuführungseinheit integriert, insbesondere innerhalb einer strömungsführenden Leitung der Gaszuführungseinheit. Auf diese Weise wird eine besonders kompakte Gestaltung erzielt, die eine Anordnung auch in den bei den meisten modernen Fahrzeugkonzepten extrem geringen Bauräumen ermöglicht. Zudem lassen sich durch die nahe Unterbringung der drei Bauteile - Gaszuführungssystem, Gleichrichter und Verdichter - die Strömungswege verkürzen, wodurch ein besonders schneller Lastaufbau des Verbrennungsmotors bewirkt wird. Hierdurch verbessert sich die Dynamik im Fahrbetrieb, etwa das Anfahrverhalten oder die Beschleunigung, erheblich.

Die Gaszuführungseinheit hat im Wesentlichen die Aufgabe, den zweiten Gasstrom dem ersten Gasstrom zuzuleiten und beide zu vermischen. Erfindungsgemäß ist die Gaszuführungseinheit als eine Strahlpumpe ausgebildet, sodass der erste Gasstrom (insbesondere Frischluftstrom) als Treibstrom zum Ansaugen des zweiten Gasstroms (Abgasstrom) dient. Auf diese Weise kann insbesondere bei geringen Abgasdrücken eine passive Ansaugung des Abgasstroms realisiert werden. Dabei umfasst die Strahlpumpe vorzugsweise eine erste Leitung zur Führung des ersten Gasstroms und eine zweite Leitung zur Zuführung des zweiten Gasstroms, die mittels einer Einmündung an die erste Leitung angeschlossen ist. Dabei ist die Einmündung vorzugsweise als ein Ringspalt an der ersten Leitung ausgeführt. Eine im Rahmen der Erfindung besonders geeignete Ausführung einer solchen Gaszuführungseinheit ist in DE 10 2011 117 360 A1 beschrieben.

Gemäß einer bevorzugten Ausführung umläuft die zweite Leitung die erste Leitung azimutal über zumindest eine halbe Umfangslänge, insbesondere zumindest eine gesamte Umfangslänge der ersten Leitung, wobei die zweite Leitung einen sich in Strömungsrichtung des zweiten Gasstroms verringernden Strömungsquerschnitt aufweist. Hierdurch werden eine Beschleunigung des zweiten Gasstroms und damit eine effizientere Vermischung mit dem ersten Gasstrom erzielt.

Der hohlzylinderförmige Leitungsabschnitt des Strömungsgleichrichters ist in bevorzugter Ausführung an oder in der ersten Leitung zur Führung des ersten Gasstroms, insbesondere an ihrem stromabwärtigen Ende, angeordnet oder er ist einstückig mit dieser ausgebildet. Hierdurch wird eine einfache Integration des Strömungsgleichrichters in oder an der Gaszuführungseinheit ermöglicht.

Erfindungsgemäß beträgt eine axiale Länge zwischen der Einmündung der zweiten Leitung der Gaszuführungseinheit und einer strömungseingangsseitigen Eintrittsebene in den Strömungsgleichrichter höchstens 30 mm, insbesondere höchstens 20 mm, vorzugsweise höchstens 10 mm. Dabei ist die strömungseingangsseitige Eintrittsebene in den Strömungsgleichrichter durch die Anströmkante der radialen Strömungselemente definiert. Ferner beträgt erfindungsgemäß eine axiale Länge zwischen der Einmündung der zweiten Leitung der Gaszuführungseinheit und einem Eintritt in den Verdichter höchstens 80 mm, insbesondere höchstens 60 mm, vorzugsweise höchstens 50 mm. Hierdurch wird das Dynamikverhalten im Fahrbetrieb noch weiter verbessert und der Kompaktierungsgrad der Baugruppe weiter vergrößert.

Erfindungsgemäß umfasst der Verdichter ein Gehäuse, welches einstückig mit der Gaszuführungseinheit und dem Strömungsgleichrichter ausgebildet ist. Hierdurch ergibt sich der Vorteil einer einfachen Herstellung dieser Komponenten, beispielsweise mittels Gießens.

Der Verdichter des Abgasturboladers kann einen bekannten Aufbau aufweisen und insbesondere ein Verdichterlaufrad mit wenigstens einer Verdichterschaufel umfassen. In einem Kraftfahrzeug weist der Abgasturbolader ferner eine in einem Abgaskanal angeordnete Turbine auf, die vom Abgas angetrieben wird und über eine Welle mit dem Verdichter verbunden ist, sodass das Verdichterlaufrad von der Turbine angetrieben wird. Der zweite Gasstrom ist vorzugsweise ein Abgasteilstrom, der insbesondere stromab der Turbine dem Gesamtabgasstrom entnommen und über die zweite Leitung der Gaszuführungseinheit dem Verbrennungsmotor wieder zugeführt wird.

Ein weiterer Aspekt der vorliegenden Erfindung betrifft einen Luftversorgungstrakt für einen Verbrennungsmotor, der die erfindungsgemäße Baugruppe für die Luftversorgung des Verbrennungsmotors umfasst. Dabei ist die Baugruppe mit ihrem Verdichter vorzugsweise unmittelbar mit einem Luftkrümmer des Verbrennungsmotors verbunden. Der Luftversorgungstrakt kann weitere Komponenten umfassen, beispielsweise einen Luftfilter, eine Drosselklappe etc.

Ein weiterer Aspekt der vorliegenden Erfindung betrifft ein Kraftfahrzeug mit einem Verbrennungsmotor und einem Luftversorgungstrakt mit der erfindungsgemäßen Baugruppe. Das Kraftfahrzeug bezieht sich hierbei insbesondere auf ein Personenkraftfahrzeug oder ein Lastkraftfahrzeug.

Die Herstellung der Baugruppe kann insbesondere durch ein Gussverfahren erfolgen, wobei wenigstens ein Bauteil oder mehrere Bauteile der Baugruppe oder alle Bauteile der Baugruppe als einstückiges (integrales) Bauteil aus einem Guss hergestellt werden können. Vorteilhafter Weise kann dadurch eine kostengünstige und montagefreundliche Baugruppe mit geringem Fertigungsaufwand realisiert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: Baugruppe gemäß einer Ausgestaltung der Erfindung, umfassend Gaszuführungseinheit, Strömungsgleichrichter und Verdichter;
- Figur 2: Schnittansicht der Baugruppe aus Figur 1 in der Ebene des Strömungsgleichrichters;
- Figur 3: Einzelansicht einer Ausführungsvariante des Strömungsgleichrichters; und
- Figur 4: Einzelansicht einer weiteren Ausführungsvariante des Strömungsgleichrichters;
- Figur 5: Detailansicht eines Strömungselements der Strömungsgleichrichter aus Figur 3 oder 4;
- Figur 6: Strömungsbild eines Mischgases in einem Bauteil gemäß Figur 1 in der Ebene stromab der Einmündung und stromauf des Strömungsgleichrichters, ermittelt mit numerischer Strömungssimulation (CFD); und
- Figur 7: Strömungsbild eines Mischgases in dem Bauteil gemäß Figur 1 stromab des Strömungsgleichrichters, ermittelt mit CFD.

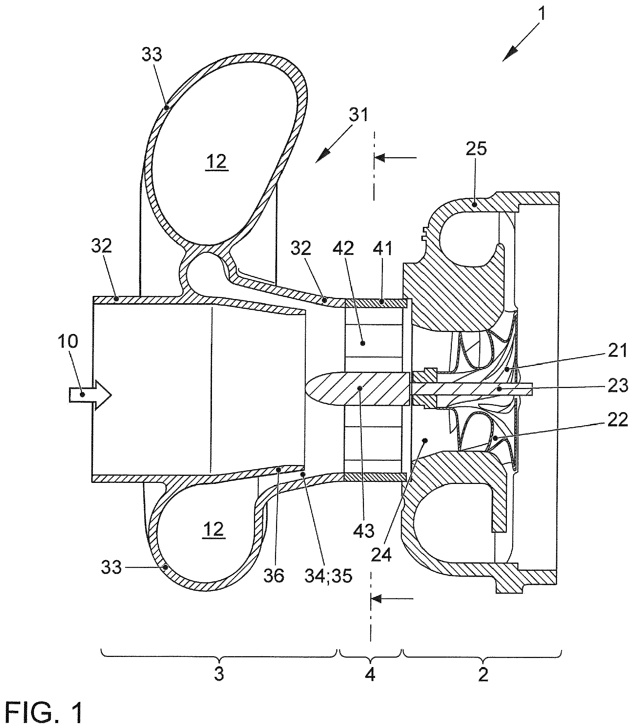

Figur 1 zeigt eine erfindungsgemäße, insgesamt mit 1 bezeichnete Baugruppe für eine Luftversorgung eines Verbrennungsmotors. Die Baugruppe 1 umfasst einen Verdichter 2, der Teil eines nicht weiter dargestellten Turboladers ist; eine Gaszuführungseinheit 3, die stromauf des Verdichters 2 angeordnet und ausgebildet ist, einen ersten Gasstrom 10 und einen zweiten Gasstrom 12 miteinander zu vermischen; und einen Strömungsgleichrichter 4, der ausgebildet ist, eine Strömung des vermischten Gasstroms stromauf des Verdichters 2 im Wesentlichen zu parallelisieren.

Die Baugruppe 1 ist in einem nicht weiter dargestellten Luftversorgungstrakt integriert, der einen Verbrennungsmotor mit verdichteter Luft versorgt. Somit handelt es sich bei dem ersten Gasstrom 10 um einen Frischluftstrom, der aus der Umgebung angesaugt und vorzugsweise über einen Luftfilter gereinigt wird, und bei dem zweiten Gasstrom 12 um einen Abgasstrom, der einem Abgastrakt des Verbrennungsmotors, insbesondere stromab einer im Abgaskanal angeordneten Turbine des Abgasturboladers entnommen und zurückgeführt wird.

Der Verdichter 2 hat einen an sich bekannten Aufbau und umfasst ein Gehäuse 25 und ein darin angeordnetes Verdichterlaufrad 21, das drehbar auf einer Welle 23 gelagert ist und mehrere Verdichterschaufeln 22 aufweist. Eingangsseitig (niederdruckseitig) weist der Verdichter 2 eine Strömungsverengung auf, sodass hier eine Düse 24 ausgebildet wird.

Ausgangsseitig (hochdruckseitig, in der Darstellung rechts) ist der Verdichter 2 an den nicht dargestellten Verbrennungsmotor anschließbar, insbesondere an einen Luftkrümmer von diesem.

Die Gaszuführungseinheit 3 weist eine zentrale erste Leitung 32 zur Führung des Luftstroms 10 auf. Ferner umfasst die Gaszuführungseinheit 3 eine zweite Leitung 33 zur Zuführung des Abgasstroms 12. Die zweite Leitung 33 umläuft die erste Leitung 32 azimutal über etwas mehr als eine Umfangslänge der ersten Leitung 32. Dabei verringert sich ein lichter Strömungsquerschnitt der zweiten Leitung 33 stetig und mündet schließlich in eine Einmündung 34. Die Einmündung 34 der zweiten Leitung 33 in die erste Leitung 32 ist in Form eines Ringspalts 35 ausgebildet, der die erste Leitung 32 im Wesentlichen koaxial umgibt. Im Bereich der Einmündung 34 weist die erste Leitung 32 eine Verengung 36 auf, wodurch eine Düse ausgebildet wird. Durch die Verengung des Strömungsquerschnitts der zweiten Leitung 33 mündend in den Ringspalt 35 sowie die Verengung 36 der ersten Leitung 32 werden beide Gasströme 10, 12 beschleunigt.

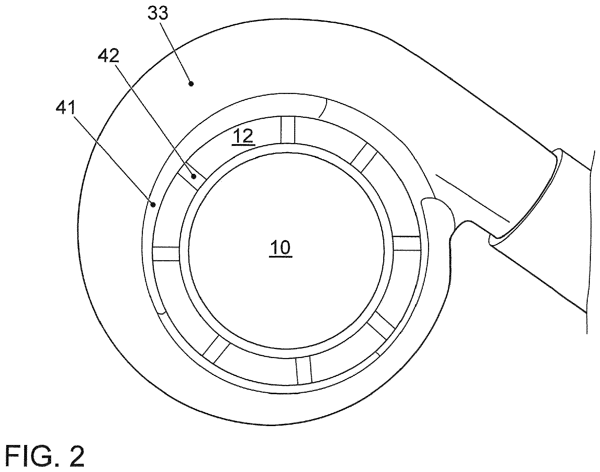

Stromab der Einmündung 34 schließt der Strömungsgleichrichter 4 an. Eine Schnittdarstellung der Baugruppe 1 in Höhe des Strömungsgleichrichters 4 gemäß der in Figur 1 dargestellten Schnittlinie ist in Figur 2 gezeigt. Der Strömungsgleichrichter 4 umfasst einen hohlzylinderförmigen Leitungsabschnitt 41, der gemäß dem dargestellten Beispiel unmittelbar an einem ausgangsseitigen Ende der ersten Leitung 32 anschließt, insbesondere einstückig mit der ersten Leitung 32 ausgebildet ist. Der Leitungsabschnitt 41 kann alternativ auch an die erste Leitung 32 angeflanscht sein. Ferner umfasst der Strömungsgleichrichter 4 ein axial angeordnetes konisches Strömungselement 43, das strömungseingangsseitig eine abgerundete Spitze aufweist. Der Strömungsquerschnitt des konischen Strömungselements 43 entspricht im Wesentlichen dem der Nabe, welche die Welle 23 des Verdichters lagert. Die Spitze des axialen Strömungselements 43 ist strömungsmechanisch optimiert. Durch das axiale Strömungselement 43 wird ein Aufspreizen des zunächst zentral und axial strömenden Frischluftstroms 10 in radialer Richtung bewirkt und damit ein verbessertes Anströmen des Verdichterlaufrades 21 mit seinen Verdichterschaufeln 22 bewirkt. Entlang eines äußeren Umfangs des axialen Strömungselements 43 sind mehrere radiale Strömungselemente 42 äquidistant zueinander angeordnet und erstrecken sich radial nach außen in Richtung des hohlzylinderförmigen Leitungsabschnitt 41, womit eine verbesserte Durchmischung mit dem Abgasstrom 12 und eine im Wesentlichen parallelisierte Strömung erzielt wird.

Bei der Ausführung gemäß Figur 1 ist der Strömungsgleichrichter 4 in der Gaszuführungseinheit 3 derart integriert, dass der hohlzylinderförmige Leitungsabschnitt 41 einstückig mit der ersten Leitung 32 der Gaszuführungseinheit 3 ausgebildet ist. (Gemäß einer gleichwertigen alternativen Beschreibung ist der Strömungsgleichrichter 4, bestehend aus den radialen Strömungselementen 42 und dem axialen konischen Strömungselement 43, innerhalb der Gaszuführungseinheit 3, nämlich innerhalb der ersten Leitung 32 angeordnet.)

Die Gaszuführungseinheit 3, bestehend aus den Leitungen 32 und 33, ist einstückig mit dem Gehäuse 25 des Verdichters ausgebildet. Hierdurch ergibt sich ein Vorteil in der Fertigung und Montage, da diese Bauteile als ein einziges integrales Bauteil hergestellt, insbesondere gegossen werden können.

Dabei beträgt der Abstand zwischen der Einmündung 34 der zweiten Leitung 33 und der strömungseingangsseitigen Eintrittsebene in den Strömungsgleichrichter 4, die durch die Lage der Anströmfläche der Strömungselemente 42 definiert ist, vorzugsweise höchstens 15 mm. Durch diese kompakte Anordnung der funktionalen Elemente, bestehend aus Gaszuführungseinheit 3, Strömungsgleichrichter 4 und Verdichter 2, wird eine Unterbringung auch in beengten Bauräumen ermöglicht. Ferner wird aufgrund der kurzen Gaslauflängen die Dynamik des Motors im Fahrbetrieb erheblich verbessert, beispielsweise beim Anfahren oder Beschleunigen.

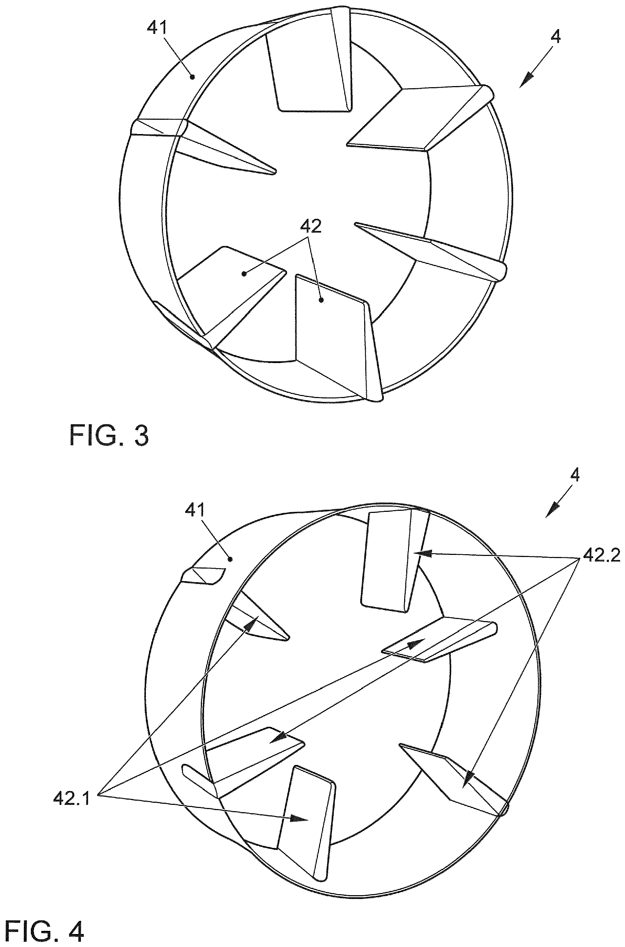

In Figur 3 ist eine weitere Ausführungsvariante des Strömungsgleichrichters 4 dargestellt. Der Gleichrichter 4 ist hier als ein einstückiges Bauteil ausgebildet, wiederum umfassend einen Hohlzylinder 41 und sechs äquidistant angeordnete radiale Strömungselemente 42, die in diesem Bespiel in einer identischen Strömungsebene angeordnet sind. Dieser Gleichrichter 4 kann in beliebige Leitungen eingesetzt werden, insbesondere innerhalb des ausgangsseitigen Endes der Gaszuführungseinheit 3 eingesetzt/integriert werden. In dieser Variante bildet der hohlzylinderförmige Leitungsabschnitt 41 somit nicht den Fortsatz der ersten Leitung 32 der Gaszuführungseinheit 3, sondern wird innerhalb von dieser angeordnet, sodass der hohlzylinderförmige Leitungsabschnitt 41 mit seiner Außenfläche an der Innerfläche der ersten Leitung 32 anliegt. Somit kann die erste Leitung 32 der Gaszuführungseinheit 3 direkt mit dem Gehäuse 25 des Verdichters 2 verbunden oder einstückig mit diesem ausgeführt sein.

Eine weitere Ausführungsvariante des Strömungsgleichrichters 4 zeigt Figur 4. Der hier dargestellte Strömungsgleichrichter unterscheidet sich von dem der Figur 3 dadurch, dass die Strömungselemente 42 wechselseitig mit einer geringen Staffelung bezüglich der Ebene des Strömungsquerschnitts angeordnet sind. Insbesondere ist eine erste Gruppe von Strömungselementen 42.1 in einer eingangsseitigen Ebene angeordnet und eine zweite Gruppe von Strömungselementen 42.2 in einer ausgangsseitigen Ebene.

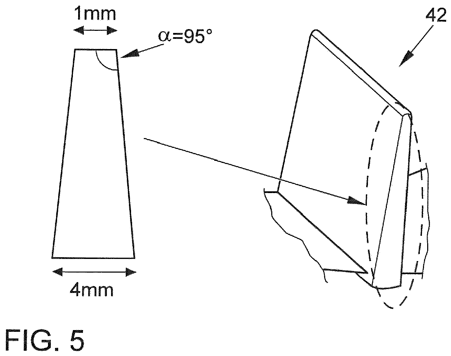

Eine Detailansicht einer bespielhaften Ausführung eines radialen Strömungselements 42 des Strömungsgleichrichters 4 sowie seine Abmessungen zeigt Figur 5. Es ist erkennbar, dass das Strömungselement 42 eine relativ breite Basisfläche mit 4 mm Breite aufweist, welche dem hohlzylinderförmigen Leitungsabschnitt 41 zugewandt ist. Radial in Richtung der Strömungsachse des Gasstroms verjüngt sich das Strömungselement 42 beispielsweise auf eine Breite von 1 mm, sodass sich eine trapezförmige Querschnittsfläche beziehungsweise Anströmfläche ergibt, die von dem Gasstrom angeströmt wird. Der Begriff trapezförmig' bezieht sich hierbei auf ein Viereck mit zwei parallel zueinander verlaufenden Grundseiten und zwei Schenkeln, welche nicht parallel zueinander verlaufen. Die Schenkel sind vorzugsweise symmetrisch. Der Winkel zwischen den Schenkeln und der zweiten Grundseite beträgt hier ca. 95°. Die Höhe (radiale Erstreckung) des Elements 42 beträgt ca. 20 mm, während eine Länge in axialer Strömungsrichtung ca. 30 mm beträgt. Somit ergibt sich beidseitig des Strömungselements 42 jeweils eine Strömungsfläche von 6 cm², die von dem Gasstrom überströmt wird.

Die konkreten Abmessungen und Anzahl der Strömungselemente 42 sollten in Abhängigkeit von der Bauteilgeometrie angepasst werden, insbesondere vom Strömungsquerschnitt des hohlzylinderförmigen Leitungsabschnitts 41, welcher im Wesentlichen dem der ersten Leitung 32 entspricht. Hinsichtlich der Anzahl der Strömungselemente 42 gilt, dass mit einer größer werdenden Anzahl von in einer Strömungsebene angeordneten Strömungselementen 42 die Gleichrichtung, also die Parallelisierung der Strömung verbessert wird. Allerdings steigt gleichzeitig der Druckverlust, sodass hier ein Kompromiss zu finden ist. Als besonders effektiv im Sinne der Gleichrichtung der Gasströmung (ca. 98 % Gleichrichtung) bei vergleichsweise geringem Druckverlust hat sich eine Anzahl von 5 Strömungselementen 42 erwiesen.

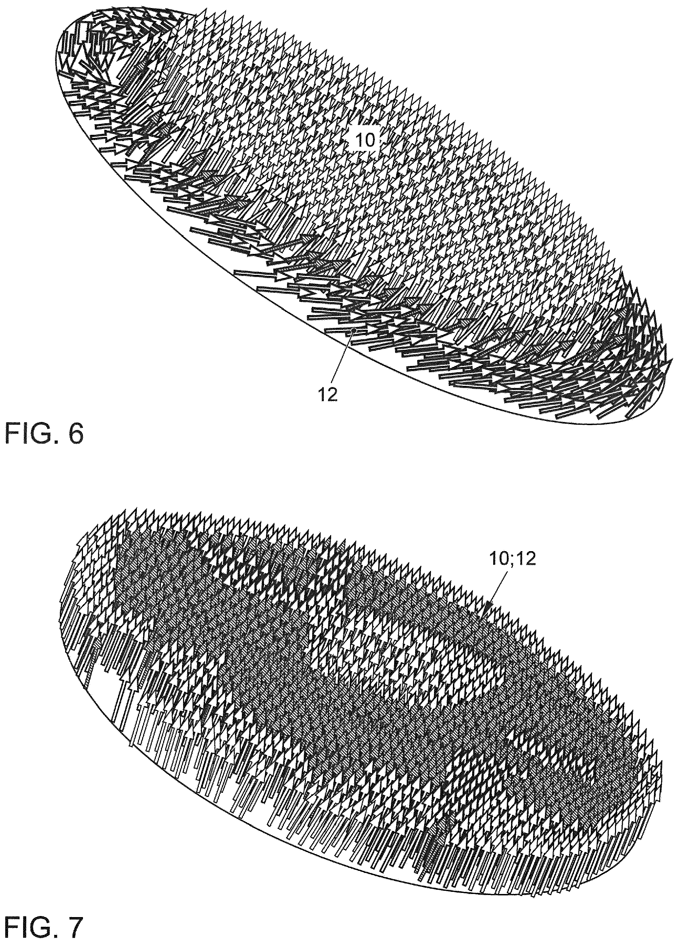

Figur 6 und 7 veranschaulichen das simulierte Strömungsbild in einer Baugruppe 1 ähnlich Figur 1, jedoch mit einem in die erste Leitung 32 der Gaszuführungseinheit 3 eingesetzten Strömungsgleichrichter 4 gemäß Figur 4. Dabei zeigt Figur 6 das Strömungsbild direkt nach der Zusammenführung der zwei Gasströme 10, 12 hinter der Einmündung 34 aber noch stromauf des Gleichrichters 4 und Figur 7 das Strömungsbild direkt stromab des Gleichrichters 4.

Aus Figur 6 wird einerseits ersichtlich, dass der Abgasstrom 12 stromauf des Gleichrichters 4 einem starken Drall unterliegt (symbolisiert durch die starke Neigung der Strömungspfeile), während der zentrale Frischluftstrom 10 weiterhin gleichgereichtet ist (symbolisiert durch die axial ausgerichteten Strömungspfeile). Weiterhin geht aus Figur 6 hervor, dass der Abgasstrom 12 einen Ring oder Schlauch ausbildet, der den Frischluftstrom 10 umgibt. Es findet somit kaum stoffliche und thermische Vermischung der beiden Gasströme 10, 12 statt. Somit weist der äußere Abgasstrom 12 eine deutlich höhere Temperatur auf als der zentrale Frischluftstrom 10.

Demgegenüber liegt, wie Figur 7 veranschaulicht, stromab des Strömungsgleichrichters 4 eine gute stoffliche und thermische Durchmischung des Abgasstroms 10 mit dem Luftstrom 12 vor und eine sehr gute Gleichrichtung (angezeigt durch die axiale Ausrichtung aller Strömungspfeile). Der in Figur 6 ersichtliche Drall des Abgasstroms 12 ist im Wesentlichen vollständig verschwunden.

Dies zeigt, dass die radialen Strömungselemente 42 eine Drall vermindernde Wirkung entfalten, indem sie die Strömungsfäden des Gasstroms gleichsam "aufrichten" und in axialer Strömungsrichtung parallelisieren.

### Bezugszeichenliste

- 1: Baugruppe
- 10: erster Gasstrom, Frischluft
- 12: zweiter Gasstrom, Abgas
- 2: Verdichter
- 21: Verdichterlaufrad
- 22: Verdichterschaufel
- 23: Welle
- 24: Düse
- 25: Gehäuse
- 3: Gaszuführungseinheit
- 31: Strahlpumpe
- 32: erste Leitung zur Führung des ersten Gasstroms
- 33: zweite Leitung zur Zuführung des zweiten Gasstroms
- 34: Einmündung
- 35: Ringspalt
- 36: Verengung, Düse
- 4: Gleichrichter
- 41: hohlzylinderförmiger Leitungsabschnitt, Hohlzylinder
- 42: radiales Strömungselement
- 43: konisches Strömungselement

## Patentansprüche

1. Baugruppe (1) für eine Luftversorgung eines Verbrennungsmotors, umfassend:
einen Verdichter (2) eines Abgasturboladers,
eine Gaszuführungseinheit (3), die stromauf des Verdichters (2) angeordnet ist und ausgebildet ist, einen ersten Gasstrom (10) und einen zweiten Gasstrom (12) miteinander zu vermischen, und
einen Strömungsgleichrichter (4), welcher ausgebildet ist, eine Strömung des vermischten Gasstroms stromauf des Verdichters (2) zu parallelisieren,
**dadurch gekennzeichnet, dass**
die Gaszuführungseinheit (3) als eine Strahlpumpe (31) ausgebildet ist, umfassend eine erste Leitung (32) zur Führung des ersten Gasstroms (10) und eine zweite Leitung (33) zur Zuführung des zweiten Gasstroms (12), die mittels einer Einmündung (34) an die erste Leitung (32) angeschlossen ist, wobei die Einmündung (34) als ein Ringspalt (35) an der ersten Leitung (32) ausgeführt ist,
wobei eine axiale Länge zwischen der Einmündung (34) der zweiten Leitung (33) und einer strömungseingangsseitigen Eintrittsebene in den Strömungsgleichrichter (4) höchstens 30 mm beträgt und/oder eine axiale Länge zwischen der Einmündung (34) der zweiten Leitung (33) und einem Eintritt in den Verdichter (2) höchstens 80 mm beträgt, und
der Verdichter (2) ein Gehäuse (25) umfasst, welches einstückig mit dem Strömungsgleichrichter (4) und der Gaszuführungseinheit (3) ausgebildet ist.

2. Baugruppe (1) nach einem der vorhergehenden Ansprüche, **dadurch gekennzeichnet, dass** der Strömungsgleichrichter (4) eine Mehrzahl radialer Strömungselemente (42) umfasst.

3. Baugruppe (1) nach Anspruch 2, **dadurch gekennzeichnet, dass** der Strömungsgleichrichter (4) einen hohlzylinderförmigen Leitungsabschnitt (41) umfasst, an dessen innerem Umfang die radialen Strömungselemente (42) angeordnet sind, wobei der hohlzylinderförmige Leitungsabschnitt (41) und die radialen Strömungselemente (42) insbesondere einstückig ausgebildet sind.

4. Baugruppe (1) nach Anspruch 2, **dadurch gekennzeichnet, dass** der Strömungsgleichrichter (4) ein axiales Strömungselement (43) umfasst, an dessen äußeren Umfang die radialen Strömungselemente (42) angeordnet sind, wobei das axiale Strömungselement (43) und die radialen Strömungselemente (42) insbesondere einstückig ausgebildet sind.

5. Baugruppe (1) nach einem der vorhergehenden Ansprüche, **dadurch gekennzeichnet, dass** der Strömungsgleichrichter (4) innerhalb der Gaszuführungseinheit (3) integriert ist.

6. Baugruppe (1) nach einem der vorhergehenden Ansprüche, **dadurch gekennzeichnet, dass** die zweite Leitung (33) die erste Leitung (32) zumindest über eine halbe Umfangslänge der ersten Leitung (32) azimutal umläuft und einen sich in Strömungsrichtung des zweiten Gasstroms (12) verringernden Strömungsquerschnitt aufweist.

7. Baugruppe (1) nach einem der vorhergehenden Ansprüche, **dadurch gekennzeichnet, dass** der hohlzylinderförmige Leitungsabschnitt (41) des Strömungsgleichrichters (4) an oder in der ersten Leitung (32) zur Führung des ersten Gasstroms (10) angeordnet ist oder einstückig mit dieser ausgebildet ist.

8. Luftversorgungstrakt für einen Verbrennungsmotor, umfassend eine Baugruppe (1) nach einem der Ansprüche 1 bis 7.

9. Kraftfahrzeug mit einem Verbrennungsmotor und einem Luftversorgungstrakt mit einer Baugruppe (1) nach einem der Ansprüche 1 bis 7.

## Claims

1. Assembly (1) for an air supply of an internal combustion engine, comprising:
a compressor (2) of an exhaust turbocharger;
a gas feeding unit (3) which is disposed upstream of the compressor (2) and is designed to mix a first gas flow (10) and a second gas flow (12) with one another; and
a flow rectifier (4) which is designed to parallelize a flow of the mixed gas flow upstream of the compressor (2),
**characterized in that**
the gas feeding unit (3) is designed as a jet pump (31), comprising a first line (32) for conducting the first gas flow (10), and a second line (33) for feeding the second gas flow (12), said second line (33) being connected to the first line (32) by means of a aperture (34), wherein the aperture (34) is embodied as an annular gap (35) on the first line (32) ;
wherein an axial length between the aperture (34) of the second line (33) and an inflow-proximal entrance plane into the flow rectifier (4) is at most 30 mm, and/or an axial length between the aperture (34) of the second line (33) and an entrance to the compressor (2) is at most 80 mm; and the compressor (2) comprises a housing (25) which is formed integrally with the flow rectifier (4) and the gas feeding unit (3).

2. Assembly (1) according to one of the preceding claims, **characterized in that** the flow rectifier (4) comprises a plurality of radial flow elements (42).

3. Assembly (1) according to Claim 2, **characterized in that** the flow rectifier (4) comprises a hollow-cylindrical line portion (41), the radial flow elements (42) being disposed on the inner circumference of the latter, wherein the hollow-cylindrical line portion (41) and the radial flow elements (42) are in particular integrally formed.

4. Assembly (1) according to Claim 2, **characterized in that** the flow rectifier (4) comprises an axial flow element (43), the radial flow elements (42) being disposed on the outer circumference of the latter, wherein the axial flow element (43) and the radial flow elements (42) are in particular integrally formed.

5. Assembly (1) according to one of the preceding claims, **characterized in that** the flow rectifier (4) is integrated within the gas feeding unit (3).

6. Assembly (1) according to one of the preceding claims, **characterized in that** the second line (33) encircles the first line (32) azimuthally at least over half the circumferential length of the first line (32) and has a flow cross section that decreases in the flow direction of the second gas flow (12) .

7. Assembly (1) according to one of the preceding claims, **characterized in that** the hollow-cylindrical portion (41) of the flow rectifier (4) is disposed on or in the first line (32) for conducting the first gas flow (10), or is formed integrally with this first line (32).

8. Air supply duct for an internal combustion engine, comprising an assembly (1) according to one of Claims 1 to 7.

9. Motor vehicle having an internal combustion engine and an air supply duct having an assembly (1) according to one of Claims 1 to 7.

## Revendications

1. Ensemble (1) pour l'alimentation en air d'un moteur à combustion interne, comprenant :
un compresseur (2) d'un turbocompresseur à gaz d'échappement,
une unité (3) d'alimentation en gaz, qui est agencée en amont du compresseur (2) et qui est conçue pour mélanger un premier flux de gaz (10) et un deuxième flux de gaz (12) l'un avec l'autre, et
un redresseur d'écoulement (4), qui est conçu pour paralléliser un flux du flux de gaz mélangé en amont du compresseur (2),
**caractérisé en ce que**
l'unité (3) d'alimentation en gaz est conçue comme une pompe à jet (31), comprenant une première conduite (32) pour le guidage du premier flux de gaz (10) et une deuxième conduite (33) pour l'alimentation du deuxième flux de gaz (12), qui est raccordée à la première conduite (32) au moyen d'une embouchure (34), l'embouchure (34) étant conçue sous la forme d'une fente annulaire (35) sur la première conduite (32),
une longueur axiale entre l'embouchure (34) de la deuxième conduite (33) et un plan d'entrée côté entrée de l'écoulement dans le redresseur d'écoulement (4) étant au maximum de 30 mm, et/ou une longueur axiale entre l'embouchure (34) de la deuxième conduite (33) et une entrée dans le compresseur (2) étant au maximum de 80 mm, et
le compresseur (2) comprend un boîtier (25) qui est formé en une seule pièce avec le redresseur d'écoulement (4) et l'unité (3) d'alimentation en gaz.

2. Ensemble (1) selon l'une des revendications précédentes, **caractérisé en ce que** le redresseur d'écoulement (4) comprend une pluralité d'éléments d'écoulement radiaux (42).

3. Ensemble (1) selon la revendication 2, **caractérisé en ce que** le redresseur d'écoulement (4) comprend une section de conduite (41) en forme de cylindre creux, sur la périphérie intérieure de laquelle sont agencés les éléments d'écoulement radiaux (42), la section de conduite (41) en forme de cylindre creux et les éléments d'écoulement radiaux (42) étant notamment réalisés d'un seul tenant.

4. Ensemble (1) selon la revendication 2, **caractérisé en ce que** le redresseur d'écoulement (4) comprend un élément d'écoulement axial (43) sur la périphérie extérieure duquel sont agencés les éléments d'écoulement radiaux (42), l'élément d'écoulement axial (43) et les éléments d'écoulement radiaux (42) étant notamment formés en une seule pièce.

5. Ensemble (1) selon l'une des revendications précédentes, **caractérisé en ce que** le redresseur d'écoulement (4) est intégré à l'intérieur de l'unité (3) d'alimentation en gaz.

6. Ensemble (1) selon l'une des revendications précédentes, **caractérisé en ce que** la deuxième conduite (33) contourne la première conduite (32) en azimut au moins sur une demi-longueur périphérique de la première conduite (32) et présente une section d'écoulement qui se réduit dans le sens d'écoulement du deuxième flux de gaz (12).

7. Ensemble (1) selon l'une des revendications précédentes, **caractérisé en ce que** la section de conduite (41) en forme de cylindre creux du redresseur d'écoulement (4) est agencée sur ou dans la première conduite (32) pour le guidage du premier flux de gaz (10) ou est réalisée d'un seul tenant avec celle-ci.

8. Conduite d'alimentation en air d'un moteur à combustion interne, comprenant un ensemble (1) selon l'une quelconque des revendications 1 à 7.

9. Véhicule automobile équipé d'un moteur à combustion interne et d'un circuit d'alimentation en air comprenant un ensemble (1) selon l'une des revendications 1 à 7.
